# EUROPEAN PATENT SPECIFICATION

(11) **EP 1 607 826 B1**
(45) Date of publication and mention of the grant of the patent: **12.12.2012**
(21) Application number: 05104770.2
(22) Date of filing: 02.06.2005
(51) Int. Cl.: G06F 21/20

(54) **Verifying human interaction to a computer entity by way of a trusted component on a computing device**
Verifikation von menschlicher Interaktion mit einer Computerinstanz durch eine Vertrauenskomponente auf einem Computergerät
Vérification d'interaction humaine avec une entité informatique en utilisant un composant sécurisé sur un dispositif informatique

(30) Priority: 15.06.2004 US 868116
(43) Date of publication of application: 21.12.2005
(73) Proprietor: MICROSOFT CORPORATION, Redmond, Washington 98052-6399 (US)
(72) Inventor: Meek, Christopher A., Redmond, Washington 98052 (US); Heckerman, David Earl, Redmond, Washington 98052 (US); Benaloh, Josh D., Redmond, Washington 98052 (US); Goodman, Joshua Theodore, Redmond, Washington 98052 (US); Peinado, Marcus, Redmond, Washington 98052 (US)
(74) Representative: Grünecker, Kinkeldey, Stockmair & Schwanhäusser

(56) References cited:
- EP-A1- 0 910 050
- EP-A1- 1 055 989
- EP-A2- 1 376 427
- US-A- 4 805 222
- US-A1- 2004 003 258
- US-A1- 2004 093 371
- MONROSE F ET AL: "Keystroke dynamics as a biometric for authentication" FUTURE GENERATIONS COMPUTER SYSTEMS, ELSEVIER SCIENCE PUBLISHERS. AMSTERDAM, NL LNKD- DOI:10.1016/S0167-739X(99)00059-X, vol. 16, no. 4, 1 February 2000 (2000-02-01), pages 351-359, XP004185847 ISSN: 0167-739X
- "Camram postage stamp basics" SIEMENS. POWER QUALITY. KATALOG SR 10.1.1,, 9 June 2002 (2002-06-09), XP002320378
- ANONYMOUS: "How to keep bad robots, spiders and web crawlers away" INTERNET CITATION 25 March 2002 (2002-03-25), XP002194208 Retrieved from the Internet: URL:http://web.archive.org/web/*/http://ww w.fleiner.com/bots/ [retrieved on 2002-03-25]

## Description

### TECHNICAL FIELD

The present invention relates to an architecture and method for verifying to a computer entity that a computer request made in connection with a computing device originated from a human and not from a computer application or the like. More particularly, the present invention relates to such an architecture and method whereby the verification is performed by way of a trusted component operating on the computing device.

### BACKGROUND OF THE INVENTION

Human Interactive Proofs exist to demonstrate to a computer entity that a request to the entity from a computing device originates from a human at the computing device, and not merely from an application running on the computing device. Thus, such a Human Interactive Proof may be employed for example by a network site to confirm that a request for a site ID is from a human attempting to obtain a single site ID for a presumably legitimate purpose, and that such request is not from a computer application attempting to obtain multiple site IDs for a presumably illegitimate or at least unwelcome purpose. As may be appreciated, in the latter case such multiple site IDs may be employed for example by a nefarious entity wishing to hide behind such multiple site IDs in order to avoid truthfully identifying oneself.

Such a Human Interactive Proof also may be employed for example by a message recipient to confirm that a sender of a message is a human attempting to send a personal message to the recipient for a presumably welcome purpose, and that such message is not from a computer application attempting to send multiple non-personal bulk messages for a presumably unwelcome purpose. As may be appreciated, in the latter case such multiple bulk messages may for example take the form of advertising or 'spam' from a nefarious entity having no personal relationship to the recipient.

A Human Interactive Proof may further be employed for example by an on-line advertiser that pays a referral fee to an on-line intermediary each time a link provided by the intermediary is selected by a user. Here, the Proof confirms that a message is from a human selecting user human wishing to access the advertiser by way of the link, and that such message is not from a computer application attempting to send multiple non-personal bulk messages to the advertiser from the intermediary or an agent thereof. As may be appreciated, in the latter case such multiple bulk messages may for example be sent merely to generate referral fees even though no end user is involved, and is sometimes referred to as 'fraudulent click-through'. As may be further appreciated, such fraudulent click-through can occur in advertising settings and in other settings where an intermediary has an incentive to generate such messages.

More generally, it is to be appreciated that Human Interactive Proofs are employed to prevent unwanted bulk-sent messages, prevention of fraudulent click-through in an advertising setting or the like, prevention of predatory sniping on online auction sites, human proof for online purchases, human proof for account setup, and the like. Such Human Interactive Proofs, then, may be employed in any situation where a recipient of a request or message (hereinafter, 'send item') wishes to ensure that the send item originated from a human at a computing device performing human-type actions, and not merely the computing device performing programmed actions.

Each such Human Interactive Proof is essentially designed to require that a human sending the aforementioned send item expend some sort of active effort, where the effort is of the nature of an action that a computing device likely cannot perform. In one popular version of a Human Interactive Proof, for example, the prospective recipient sends to the prospective sender a 'challenge' comprising a picture of an article that may be described easily with one word, such as a dog, a ball, a pencil, etc., and the sender must send the one word with the send item. Presumably, if the sender is human, such sender can easily recognize the pictured article in the challenge and provide the word. Also presumably, if the sender is not a human but is a computing device, such sender cannot easily recognize the pictured article and provide the word. In another popular version of a Human Interactive Proof, the prospective recipient sends to the prospective sender a challenge comprising a picture of a word that is not expected to be easily recognizable based on optical character recognition protocols that maybe performed by a computing device, but that should be easily recognizable to a human, and the sender again must send the word with the send item.

At any rate, failure to provide the word with the send item may for example cause the prospective recipient to ignore the message based on the presumption that the sender is not a human sending a welcome send item. Since the effort to recognize the picture or word and provide the one word can not easily be performed by a computing device, the Human Interactive Proof for the most part establishes that the sender of the request or message is a human.

Moreover, even if the effort to recognize can somehow be performed by a computing device, or if a nefarious entity can employ human laborers to perform the recognitions, the effort imposes a cost on the computing device or laborer employer as sender, either in terms of monetary value, capacity, time, or the like. For example, a computing device sending out an email message to one million recipients may do so with relative ease based on current technologies if no Human Interactive Proof is required for each of the one million messages. However, and significantly, the same computing device sending out an email message to one million recipients must expend tremendous effort if a unique Human Interactive Proof is required for each of the one million messages. As may be appreciated, then, requiring a computing device or human laborer to perform a Human Interactive Proof for each of many send items can quickly become a severe hindrance, especially in the case where the computing device or laborer employer is attempting to send out hundreds, thousands, or even millions of such send items.

To summarize, then, Human Interactive Proofs prevent unwanted send items, such as those that may be sent out in bulk by a computing device, because the Human Interactive Proofs require the computing device to perform an action that the computing device cannot in fact perform, or else require the computing device or a human laborer to perform the action on a per send item basis and thus expend tremendous effort. Human Interactive Proofs to date suffer, however, in that such Proofs require the human to expend an active effort in order to satisfy such Proofs, and do not account for passive efforts that the human may expend in the natural course of sending an item. Put another way, current Human Interactive Proofs do not recognize that a human in sending an item expends passive or natural efforts that a computer cannot likewise expend, such as for example typing on a keyboard, moving a cursor by way of a mouse device, etc, and that by detecting expending of such passive efforts a Human Interactive Proof need not in fact require the human to expend an active or specific effort in the manner of 'jumping through a hoop'.

A need exists, then, for a Human Interactive Proof (HIP) that requires essentially no active effort be expended by a human, but that the human only expend natural efforts that are detected. In particular, a need exists for an architecture and method that implements such a Human Interactive Proof, and that verifies such detected natural effort to the recipient in a trusted manner so that the recipient can be assured that the detected natural efforts did in fact occur and were not simply contrived by a nefarious entity attempting to trick the recipient. Further, a need exists for such an architecture and method whereby a trusted component on the computing device of the sender performs such verification.

US 2004/003258 A1 relates to the monitoring of user interaction with a computer. In one example, a browser application displays an image in a display zone so that a user may read the numbers provided therein and manually enter the digits, into an entry form or field via a computer-keyboard. Once the user has completed the entire registration form, the user typically activates a "Go" button in response to which the browser application communicates the user entered data, data entered into the form and a token including reference data to a server. The server receives the token including the reference data, as part of the form, as well as the user entered number. The reference data of the token is then base64-decoded and Blowfish decrypted to obtain the reference data including a random reference number. The integrity of the reference data is then checked using a check-sum.

EP 1 055 989 A1 relates to techniques for digitally signing image data. A digital signature is generated on the basis of data used to display a document to a user. A trusted component comprises means for denying, to any unauthorized application or process, write access to at least a portion of a frame buffer memory containing digital image data of the document, and means for generating a digital signature representative of the digital image data while the respective portion of the frame buffer memory is not accessible for writing data to.

US 2004/093371 A1 relates to techniques for reducing spam and/or other unwanted behavior on a computer network, such as the Internet. A resource may be abused if its users incur little or no cost. For example, email abuse is rampant because sending an email has negligible cost for the sender. Such abuse may be discouraged by introducing an artificial cost in the form of a moderately expensive computation.

EP 1 376 427 A2 relates to techniques employing unsolicited email detection with challenges.

Monrose F. et al: "Keystroke dynamics as a biometric for authentication", Future Generations of Computer Systems, vol. 16, no. 4, 1 February 2000, pages 351 to 359 describes a technique that aims to identify users based on analyzing habitual rhythm patterns in the way they type.

"Camram postage stamp basics", Siemens Power Quality Katalog, 9 June 2002 states that there are two different postage-stamp techniques for camram. The first technique is used when contacting another email address for the first time. This technique is known as hashcache. The second technique is only used when communicating with someone you know. This technique is known as opportunistic signatures. Opportunistic signatures are based on asymmetrical key cryptography techniques such as RSA or Diffie-Hellman.

Anonymous: "How to keep bad robots, spiders and web crawlers away", Internet citation, 25 March 2002, <http://web.archive.org/web/*/http://www.fleiner.com/bots/> relates to ways to keep bad robots, spiders and web-crawlers away from a webpage.

US 4 805 222 A relates to techniques for verifying the identity of an individual based on the differences in the way people type.

EP 0 910 050 A1 relates to techniques for verifying the identity of a person without informing the person that verification of the person's identity is being performed.

### SUMMARY OF THE INVENTION

It is the object of the present invention to improve prior art systems. This object is solved by the subject matter of the independent claims. Preferred embodiments are defined by the dependent claims.

The aforementioned needs are satisfied at least in part by the present invention in which a method is provided to describe user interaction in combination with sending a send item from an application of a computing device to a recipient. The computing device has an attestation unit thereon for attesting to trustworthiness. In the method, the application on the computing device facilitates a user in constructing the send item, and one of the application and the attestation unit monitors for pre-determined indicia that can be employed to detect that the user is in fact expending effort to construct the send item.

The attestation unit authenticates the application to impart trust thereto, and one of the application and the attestation unit, upon the user commanding the application to send the constructed send item to the recipient, constructs a send attestation to accompany the send item. The send attestation is based on the monitored indicia and the authentication of the application and thereby describes the user interaction. One of the attestation unit and the application packages the constructed send attestation with the constructed send item, and one of the attestation unit and the application sends the packaged send item and send attestation to the recipient.

### BRIEF DESCRIPTION OF THE DRAWINGS

The foregoing summary, as well as the following detailed description of the embodiments of the present invention, will be better understood when read in conjunction with the appended drawings. For the purpose of illustrating the invention, there are shown in the drawings embodiments which are presently preferred. As should be understood, however, the invention is not limited to the precise arrangements and instrumentalities shown. In the drawings:

Fig. 1 is a block diagram representing a general purpose computer system in which aspects of the present invention and/or portions thereof may be incorporated;

Fig. 2 is a block diagram showing a computing device with a sending application and an attestation unit sending a send item and a send attestation to a recipient in accordance with one embodiment of the present invention; and

Figs. 3 and 4 are flow diagrams showing key steps performed at the computing device (Fig. 3) and recipient (Fig. 4) of Fig. 2 in accordance with one embodiment of the present invention.

### DETAILED DESCRIPTION OF THE INVENTION

### COMPUTER ENVIRONMENT

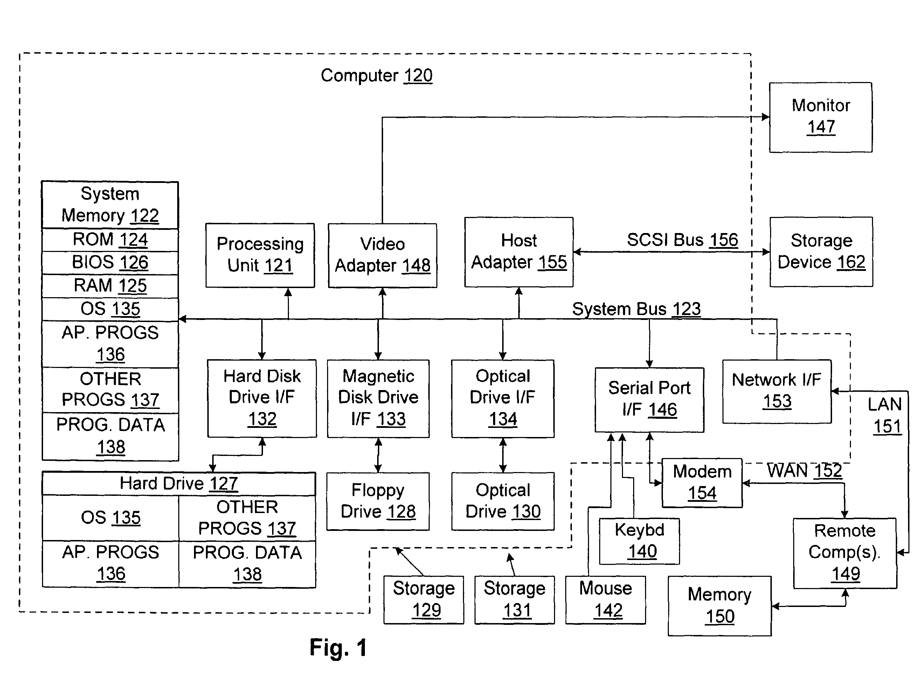

Fig. 1 and the following discussion are intended to provide a brief general description of a suitable computing environment in which the present invention and/or portions thereof may be implemented. Although not required, the invention is described in the general context of computer-executable instructions, such as program modules, being executed by a computer, such as a client workstation or a server. Generally, program modules include routines, programs, objects, components, data structures and the like that perform particular tasks or implement particular abstract data types. Moreover, it should be appreciated that the invention and/or portions thereof may be practiced with other computer system configurations, including hand-held devices, multiprocessor systems, microprocessor-based or programmable consumer electronics, network PCs, minicomputers, mainframe computers and the like. The invention may also be practiced in distributed computing environments where tasks are performed by remote processing devices that are linked through a communications network. In a distributed computing environment, program modules may be located in both local and remote memory storage devices.

As shown in Fig. 1, an exemplary general purpose computing system includes a conventional personal computer 120 or the like, including a processing unit 121, a system memory 122, and a system bus 123 that couples various system components including the system memory to the processing unit 121. The system bus 123 may be any of several types of bus structures including a memory bus or memory controller, a peripheral bus, and a local bus using any of a variety of bus architectures. The system memory includes read-only memory (ROM) 124 and random access memory (RAM) 125. A basic input/output system 126 (BIOS), containing the basic routines that help to transfer information between elements within the personal computer 120, such as during start-up, is stored in ROM 124.

The personal computer 120 may further include a hard disk drive 127 for reading from and writing to a hard disk (not shown), a magnetic disk drive 128 for reading from or writing to a removable magnetic disk 129, and an optical disk drive 130 for reading from or writing to a removable optical disk 131 such as a CD-ROM or other optical media. The hard disk drive 127, magnetic disk drive 128, and optical disk drive 130 are connected to the system bus 123 by a hard disk drive interface 132, a magnetic disk drive interface 133, and an optical drive interface 134, respectively. The drives and their associated computer-readable media provide non-volatile storage of computer readable instructions, data structures, program modules and other data for the personal computer 120.

Although the exemplary environment described herein employs a hard disk, a removable magnetic disk 129, and a removable optical disk 131, it should be appreciated that other types of computer readable media which can store data that is accessible by a computer may also be used in the exemplary operating environment. Such other types of media include a magnetic cassette, a flash memory card, a digital video disk, a Bemoulli cartridge, a random access memory (RAM), a read-only memory (ROM), and the like.

A number of program modules may be stored on the hard disk, magnetic disk 129, optical disk 131, ROM 124 or RAM 125, including an operating system 135, one or more application programs 136, other program modules 137 and program data 138. A user may enter commands and information into the personal computer 120 through input devices such as a keyboard 140 and pointing device 142. Other input devices (not shown) may include a microphone, joystick, game pad, satellite disk, scanner, or the like. These and other input devices are often connected to the processing unit 121 through a serial port interface 146 that is coupled to the system bus, but may be connected by other interfaces, such as a parallel port, game port, or universal serial bus (USB). A monitor 147 or other type of display device is also connected to the system bus 123 via an interface, such as a video adapter 148. In addition to the monitor 147, a personal computer typically includes other peripheral output devices (not shown), such as speakers and printers. The exemplary system of Fig. 1 also includes a host adapter 155, a Small Computer System Interface (SCSI) bus 156, and an external storage device 162 connected to the SCSI bus 156.

The personal computer 120 may operate in a networked environment using logical connections to one or more remote computers, such as a remote computer 149. The remote computer 149 may be another personal computer, a server, a router, a network PC, a peer device or other common network node, and typically includes many or all of the elements described above relative to the personal computer 120, although only a memory storage device 150 has been illustrated in Fig. 1. The logical connections depicted in Fig. 1 include a local area network (LAN) 151 and a wide area network (WAN) 152. Such networking environments are commonplace in offices, enterprise-wide computer networks, intranets, and the Internet.

When used in a LAN networking environment, the personal computer 120 is connected to the LAN 151 through a network interface or adapter 153. When used in a WAN networking environment, the personal computer 120 typically includes a modem 154 or other means for establishing communications over the wide area network 152, such as the Internet. The modem 154, which may be internal or external, is connected to the system bus 123 via the serial port interface 146. In a networked environment, program modules depicted relative to the personal computer 120, or portions thereof, may be stored in the remote memory storage device. It will be appreciated that the network connections shown are exemplary and other means of establishing a communications link between the computers may be used.

### VERIFYING HUMAN INTERACTION BY DETECTING PASSIVE EFFORT

In the present invention, a method and architecture are provided to implement a Human Interactive Proof that verifies that a human is involved in a computing transaction, whereby the human is sending an item to a recipient. In the Proof, and in general, the sent item is accompanied by a send attestation stating to the effect that a sufficient human effort was in fact detected in connection with the sent item, and correspondingly that the computer did not simply send the item based on a program or application that does not require any significant human effort on a per send item basis. The sufficient human effort detected may for example include a keystroke, a mouse click, a minimum number of keystrokes or mouse clicks, a minimum composition time, a selection of a maximum number of recipients, a maximum number of send items delivered per unit time, etc. In the invention, the human interaction is detected passively so that the human need not exert any active effort in connection with the send attestation. Thus, the human interaction is detected based on activities that a human would normally undertake in the course of constructing and sending a send item to a recipient thereof.

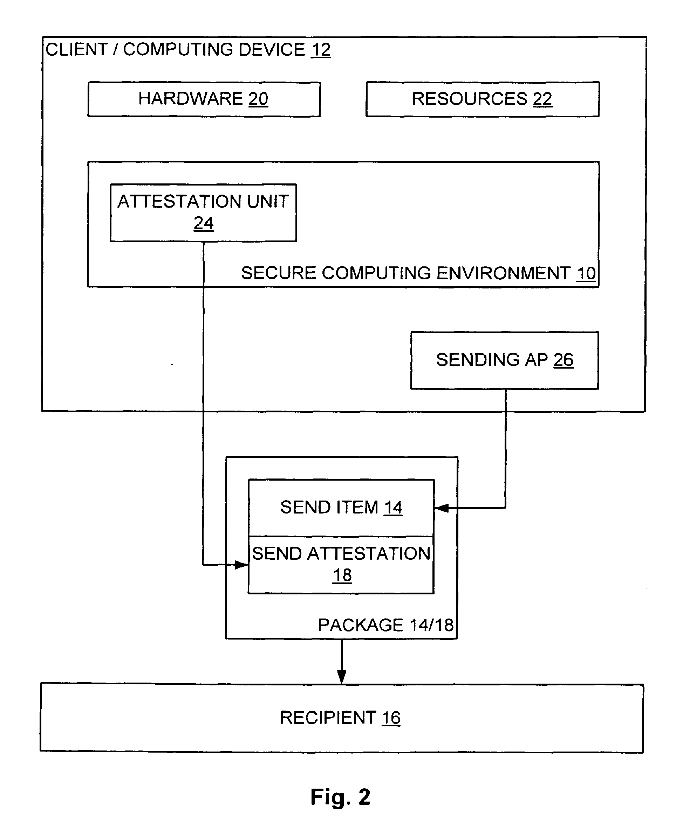

To impart trust to the send attestation, and turning now to Fig. 2, such send attestation 18 is composed by or on behalf of a secure computing environment 10 operating on the computing device 12 of the sender of the send item 14, where the secure computing environment 10 is to be trusted by the recipient 16. As maybe appreciated, the send item 14 is constructed by or in connection with the computing device 12, such as for example with the aid of a sending application 26 running on the computing device 12, and the send attestation 18 is also composed on the computing device 12. The secure computing environment 10 is configured to provide the send attestation 18 to the recipient 16 on a trusted basis to confirm that the sufficient human effort was detected in connection with the construction of the corresponding send item 14, again on a passive basis and without requiring any active involvement from the human. In various embodiments, the send item 14 includes the send attestation 18 as an attached object or the like, or the send attestation 18 is separate from but linked to the send item 14, perhaps by way of a pointer or other reference.

The computing device 12 of the sender may be any appropriate computing device without departing from the spirit and scope of the present invention. For example, the computing device may be a personal computer, a portable communications device, a wireless communications device, etc. Such computing device 12 is appropriately coupled to the recipient 16 by way of an appropriate communications link. Such link may be a direct connection or may be a network connection such as an intra- or inter-network connection employing appropriate communications protocols.

The recipient 16 is typically an application running on a server, computer, or other computing device at a location remote from or local to the computing device 12. Such recipient 16 may provide a service the sender at the computing device 12 based on a request therefrom, which in this case is in the form of the send item 14. Thus, the send item 14 may be a request for a piece of content, a request for a user ID, a request for a network resource, etc. The recipient 16 may alternatively receive a message for a user thereat, which in this case is again in the form of the send item 14. Thus, the send item 14 may also be for example a network message in the form of a mail item. It should be appreciated, then, that the send item 14 is appropriately directed to a corresponding recipient 16. Such send item 14 and corresponding recipient 16 may therefore be any appropriate send item 14 and recipient 16 without departing from the spirit and scope of the present invention.

The secure computing environment 10 operating on the computing device 12 of the sender of the send item 14 is as was set forth above a secure computing environment to be trusted by the recipient 16. Thus, the secure computing environment 10 should be able to demonstrate such trust to the recipient 16, such as for example by way of being able to proffer a key, digital signature, digital certificate, or the like. Typically, such a digital certificate includes a chain of certificates leading back to a root trust authority, and the recipient 16 accepts the digital certificate and grants trust based thereon if the recipient 16 recognizes and honors the root trust authority of such certificate.

As may be appreciated, the secure computing environment 10 operating on the computing device 12 of the sender should be free of control by other entities operating on the computing device 12 thereof or of control by other entities, either from other computing devices or of human form. Thus, the secure computing environment 10 should not be able to be forced to issue a send attestation 18 when such send attestation 18 is not warranted, such as for example may be the case should a nefarious entity wish to issue a send item 14 without appropriate human interaction.

Such secure computing environment 10 may be any appropriate secure computing environment without departing from the spirit and scope of the present invention, subject of course to the constraints set forth herein. For example, the secure computing environment 10 may be a trusted portion of an operating system on the computing device 12, where the trusted portion of such operating system is free of undue external influence. The secure computing environment 10 may either itself detect sufficient human effort in connection with a send item 14 or impart trust in some application running thereon and perhaps related hardware to so detect, and likewise may either itself construct a send attestation 18 for the send item 14 as appropriate or impart trust in some application running thereon to so construct. In one embodiment of the present invention, the secure computing environment 10 in fact includes an attestation unit 24 as an application running thereon and/or hardware running therein to detect the aforementioned sufficient human effort and to construct the aforementioned send attestation 18.

The attestation unit 24 may be any appropriate hardware and/or software without departing from the spirit and scope of the present invention. For example, the attestation unit 24 may be established as trusted software running in a trusted area of the secure computing environment 10, or may be a piece of hardware on the computing device 12 that is designed to perform the attestation functions set forth herein. In either case, such attestation unit 24 is protected from being monitored or influenced by any other software or hardware operating on the computing device, and especially is protected against attacks such as may be employed by a nefarious entity that would attempt to subvert the function of the attestation unit 24. The attestation unit 24, then, should be designed to be tamper resistant, and should be capable of digitally signing, verifying a signature, encrypting, decrypting, and the like. Such an attestation unit 24 at a minimum should be apparent to the relevant public and therefore need not be set forth herein in any detail.

Note that the secure computing environment 10 and/or attestation unit 24 thereof in detecting whether sufficient human effort has been expended likely must accept inputs that derive from hardware 20 on the computing device 12 that a human would employ in the course of constructing a send item 14. For example, such hardware 20 may include a touch screen, a keyboard, a cursor control device such as a mouse, and the like. In addition, the secure computing environment 107 attestation unit 24 (hereinafter, 'attestation unit 24') may refer to other resources 22 of the computing device 12 such as a clock, memory, a controller, and the like. Each such piece of hardware 20 and each such resource 22, then, may become an avenue by which a nefarious entity might attempt to improperly subvert detection of expending of sufficient human effort in connection with a send item 14. Accordingly, and in one embodiment of the present invention, each such piece of hardware 20 and each such resource 22 is constructed to be trusted by the attestation unit 24, and also to be able to demonstrate such trust to the attestation unit 24, such as for example by way of being able to proffer a key, digital signature, digital certificate, or the like. Again, such a digital certificate typically includes a chain of certificates leading back to a root trust authority, and the secure computing environment 10 accepts the digital certificate and grants trust based thereon if such attestation unit 24 recognizes and honors the root trust authority of such certificate.

The send attestation 18 itself may take any appropriate form without departing from the spirit and scope of the present invention. For example, the send attestation 18 may be constructed as a digital document based on some form of extensible Markup Language (XML) and may be digitally signed based on a private key and verifiable according to a corresponding public key available from the aforementioned digital certificate of the secure computing environment 10, or a digital certificate of the attestation unit 24. Thus, such send attestation 18 may include such digital certificate, and also may contain some sort of positive statement attesting to the fact that sufficient human effort was detected as being expended in the course of constructing the corresponding send item 14. In addition, it may be the case that the send attestation 18 includes details relating to such detected expended human effort, such as for example a number of keystrokes, an amount of time employed to construct the send item 14, a number of recipients 16, etc., a number of send items 14 sent during a previous predefined period, and/or details relating to hardware 20 and/or resources 22 employed. As may be appreciated, with such details the recipient 16 may perform additional filtering in the course of deciding whether to honor the send item 14.

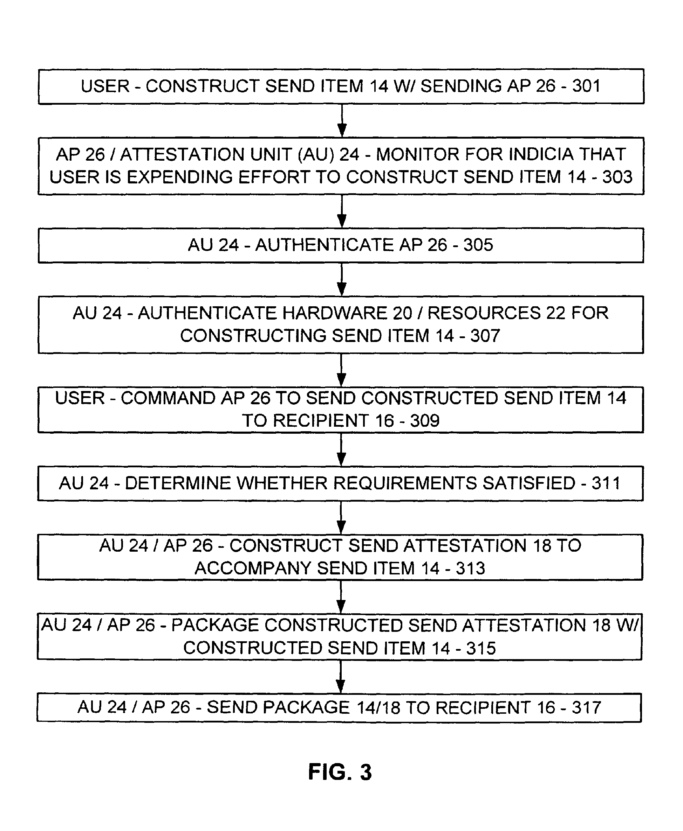

To summarize then, in the present invention, the sending user sending a send item 14 to a recipient 16 employs a computing device 12 with hardware 20 including some sort of input device such as a keyboard, a mouse, etc.; resources 22 including memory and the like; an application 26 for constructing the send item 14; and a trusted attestation unit 24 operating in a secure computing environment 10 that cannot be influenced by the user and that can attest to the send item 14. The recipient 16 upon receiving the send item 14 and accompanying send attestation 18 honors the send item 14 only if the send attestation accompanying same is acceptable to such recipient 16. Turning now to Fig. 3, a method employed by and/or in connection with the aforementioned components is shown.

Preliminarily, it is expected that a user at the computing device 12 constructs the send item 14 by way of the sending application 26 (step 301). Of course, if the send item 14 is a message, the application 26 is a message-sending application such as an electronic mail application, while if the send item 14 is a request, the application 26 is an application capable of composing the request, such as for example a computer browser based on received code from the recipient 16.

In connection with constructing the send item 14 as at step 301, one of the application 26 and the attestation unit 24 monitors for some pre-determined indicia that can be employed to detect that the user is in fact expending effort to construct the send item 14 (step 303), and that the application 26 is not itself constructing the send item 14 in the manner of an automated process without substantial user involvement. Such indicia may be any indicia without departing from the spirit and scope of the present invention. For example, the application 26 or attestation unit 24 could monitor for substantial keyboard activity and/or mouse activity, a minimum construction time for constructing the send item 14, a maximum number of send items sent per unit time, the lack of a run script by which activity of the application 26 is controlled, etc.

Significantly, prior to or after the send item 14 has been constructed as at step 301, the attestation unit 24 authenticates the application 26 (step 305) to impart trust thereto. Such authentication of such application 26 by the attestation unit 24 may for example occur when the application 26 is instantiated on the computing device 12, when the application 26 is called upon by the user to construct the send item 14, or when the send item 14 is constructed and is to be sent to the recipient 16. Such authentication of the application 26 by the attestation unit 24 may comprise any appropriate authentication without departing from the spirit and scope of the present invention. For example, such authentication may comprise the application 26 providing the attestation unit 24 with a digital certificate, and perhaps other operational documentation and perhaps information on the environment within which the application 26 is operating. Based on such information, the attestation unit 24 satisfies itself that the application 26 can be trusted to operate correctly, for example by verifying the digital certificate and ensuring that the application 26 is operating within the environment that is expected based on the operational documentation.

Note that although the attestation unit 24 could perform the monitoring of step 303, it is to be appreciated that the application 26 is itself more likely to be to perform such monitoring. Notably, doing so is simpler insofar as the application 26 is monitoring itself, and also in that the application 26 and interfaces thereof may not be well known to the attestation unit 24. At any rate, once the attestation unit 24 trusts the application 26 as at step 305, such trust should extend to the ability of the application 26 to monitor itself as at step 303.

In conjunction with authenticating the application 26 as at step 305 to impart trust thereto, the attestation unit 24 may also authenticate at least some of the hardware 20 and/or resources 22 that are used or expected to be used in constructing the send item 14 (step 307). Again, such authentication of such hardware 20 and/or resources 22 by the attestation unit 24 may for example occur when the application 26 is instantiated on the computing device 12, when the application 26 is called upon by the user to construct the send item 14, or when the send item 14 is constructed and is to be sent to the recipient 16. As before, such authentication may comprise any appropriate authentication without departing from the spirit and scope of the present invention. For example, and again, such authentication may comprise each of several pieces of hardware 20 and/or resources 22 providing the attestation unit 24 with a digital certificate, and perhaps other documentation and environment information, and based on such information, the attestation unit 24 satisfies itself that, for example, the keyboard can be trusted to operate correctly, the memory can be trusted to operate correctly, etc.

At any rate, presuming the user has in fact constructed the send item as at step 303, such user then commands the application 26 to in fact send the constructed send item 14 to the recipient 16 (step 309). Upon doing so, the attestation unit 24 determines whether all relevant requirements have been satisfied based on the monitored indicia of step 303 and the authentications of steps 305 and 307 (step 311), and if so, the attestation unit 24 and/or the application 26 constructs the send attestation 18 to accompany such send item 14 (step 313),. Thereafter, the attestation unit 24 and/or the application 26 package the constructed send attestation 18 with the constructed send item 14 (step 315), and the application 26 and/or the attestation unit 24 in fact send the packaged send item 14 and send attestation 18 to the recipient 16 (step 317).

The attestation unit 24 may determine whether all relevant requirements have been satisfied as at step 311 in any appropriate manner without departing from the scope of the present invention. For example, the attestation unit may require that all authentications as at steps 305 and 307 be successful, and also that the monitored indicia of step 303 meet some predetermined requirements. Such requirements for example may be set forth by the attestation unit 24 or by the recipient 16. In the latter case, it may be that the recipient at some prior time delivered such requirements to the attestation unit 24. Note that in performing step 311, the attestation unit may in fact perform some minimal portion of an overall determination or none at all, and leave the remainder of such determination to the recipient 16. In such case, the attestation unit 24 constructs the send attestation 18 as at step 313 to include all information necessary for the recipient 16 to make the remainder of the determination.

The attestation unit 24 and/or the application 26 may construct the send attestation 18 as at step 313 in any appropriate manner without departing from the scope of the present invention. For example, in one embodiment of the present invention, the constructed send attestation 18 includes a statement from the attestation unit 24 describing the application 26, and perhaps the hardware 20 and/or resources 22 employed, and also perhaps relevant information relating to such application 26, hardware 20, and/or resources 22 such as for example the environment thereof. As may be appreciated, such relevant information may be employed by the recipient 16 in deciding whether to accept and honor the send attestation 18 and/or in deciding whether to accept and process the send item 14. Note that while the constructed send attestation 18 may also include a statement from the attestation unit 24 to the effect that the aforementioned application 26, hardware 20 and/or resources 22 are indeed trustworthy, such statement is not believed to be absolutely necessary, especially inasmuch as such a statement is implicit in the fact that the attestation unit 24 chose to issue the statement describing the application 26.

Significantly, the constructed send attestation 18 also includes a statement describing the send item 14, and also relevant information relating to the send item 14. Notably, such statement may be from the attestation unit 24 or the application 26. In the latter case, the statement from the attestation unit 24 describing the application 26 at least implicitly states that the application 26 can be trusted to issue the statement describing the send item 14. Here, the relevant information relating to the send item 14 in the statement from the attestation unit 24 or application 26 likely includes monitored data such as a number of keyboard taps and/or a number of mouse clicks in connection with construction of the send item 14 by the user, a length of time to construct, a number of recipients 16, etc. As may be appreciated, and again, such relevant information may be employed by the recipient 16 in deciding whether to accept and honor the send attestation 18 and/or in deciding whether to accept and process the send item 14. Note again that while the constructed send attestation 18 may also include a statement to the effect that the send item 14 is indeed trustworthy, such statement is not believed to be absolutely necessary, especially inasmuch as such a statement is implicit in the fact that the attestation unit 24 or application 26 chose to issue the statement describing the send item 14.

The attestation unit 24 and/or the application 26 may package the constructed send attestation 18 with the constructed send item 14 as at step 315 in any appropriate manner without departing from the scope of the present invention. For example, in one embodiment of the present invention, the send attestation 18 is appended to the send item 14, and the combined send item 14 / send attestation 18 is signed based on a key of the attestation unit 24 to form a digital signature which is appended to the combined send item 14 / send attestation 18. As is known, such a digital signature may include or reference a chain of certificates that lead back to a root authority which is presumably known to and trusted by the recipient 16.

The application 26 and/or the attestation unit 24 may send the packaged send item 14 and send attestation 18 to the recipient 16 as at step 317 in any appropriate manner without departing from the scope of the present invention. For example, in one embodiment of the present invention, the computing device 12 of the attestation unit 24 / application 26 is coupled to the recipient 16 by way of a network such an intra- or inter-network, in which case the package 14/18 may be sent by way of one or more network packets according to a mutually acceptable network communications protocol.

Note that although heretofore described in terms of the attestation unit 24 performing various actions, it could be the case that the attestation unit 24 merely attests to and makes statements about the secure computing environment 10, and that the secure computing environment 10 performs some or all of such actions. In such case, the send attestation 18 may include a statement describing and attesting to the secure computing environment 10.

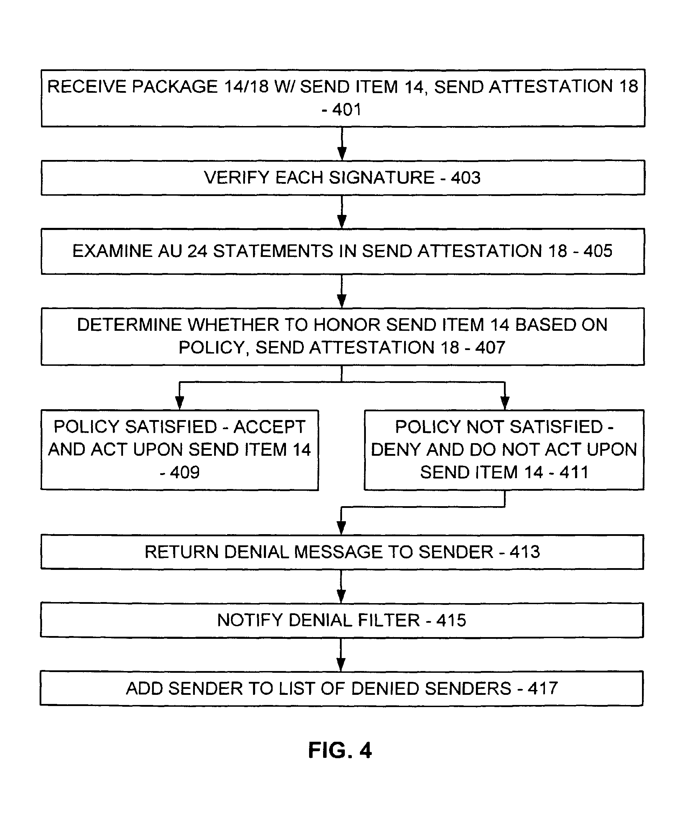

Turning now to Fig. 4, upon receiving the package 14/18 with the send item 14 and the send attestation 18 (step 401), the recipient 16 verifies each signature included therewith (step 403), including any signature based on a key of the attestation unit 24 and appended to the combined send item 14 / send attestation 18. Thereafter, the recipient 16 examines the statements from the attestation unit 24 as set forth in the send attestation 18 from the package 14/18 (step 405). In particular, the recipient 16 decides whether to honor the send item based on the statement describing the application 26 as set forth in the send attestation 18 and the statement describing the send item 14 as set forth in the send attestation 18, among other things.

In one embodiment of the present invention, such statements as set forth in the send attestation 18 are examined as at step 405 in view of a pre-determined policy set forth by or on behalf of the recipient 16. Such pre-determined policy may be any appropriate policy without departing from the spirit of the present invention. For example, such policy may set forth that the described application 26 must be of a particular type or version, or that such described application 26 not be of a particular type or version. Similarly, such policy may specify a particular environment within which the application 26 is operating, an element that is not to be present in such environment, etc.

Similarly, and with regard to the send item 14 itself, the policy may for example set forth a particular format of such send item 14, a particular encoding, a limit on the contents of such send item, a limit on the number o recipients of the send item 14, a word that should be in the send item, a word that should not be in the send item, and the like. Significantly, and with regard to the send item 14 itself, the policy may further set forth certain parameters that are relevant to the send item 14 and in particular to factors that might be determinative of whether the send item 14 was indeed constructed based on expended human effort. In this regard, and as may be appreciated, the policy may for example set forth a minimum construction time for the send item 14, a minimum number of keyboard taps, a minimum number of mouse clicks, a maximum number of send items 14 sent per unit time, and the like. Presumptively, and as should be appreciated, each aspect of policy set forth for the recipient 16 can be measured as against information obtained from the statements in the send attestation 18.

After examining the statements in the send attestation 18 based on policy as at step 405, the recipient 16 then determines whether to in fact honor the send item 14 based on whether the policy is in fact satisfied by the send attestation 18 (step 407). As should be appreciated, if the policy is in fact satisfied by the send attestation 18, the send item 14 is honored, accepted, and acted upon in whatever manner is deemed appropriate (step 409). For example, if the send item 14 is a message for a user associated with the recipient 16, such send item 14 / message is delivered to a receiving area for the user or the like. Likewise, if the send item 14 is a request for a service or an object from the recipient 16 or a related entity, such send item 14 / request is delivered to a server or the like that can process same and provide the service or object or the like.

Note that if the policy is not in fact satisfied by the send attestation 18, the send item 14 is denied and is not honored, accepted, and acted upon (step 411). In such a situation, the recipient 16 could return to the sender at the computing device 12 a simple denial message, a detailed message explaining the denial, or the like (step 413). However, and especially in the case where the sender is some sort of nefarious entity, it may be the case that any return message could bring further unwanted requests or other unwanted attention, and in such case such return message is likely inadvisable.

The recipient 16 could also in a denial situation notify a denial filter of same (step 415). As may be appreciated, such denial filter would then filter out further requests from the sender of the denied request. In addition or in the alternative, the recipient 16 could also in a denial situation add the sender of the denied request to a list of denied senders (step 417). Here, further requests from the sender would not be filtered out but would be treated differently based on being on such list.

### CONCLUSION

The present invention may be practiced with regard to any appropriate sender sending a send item 14 to a recipient, presuming that such sender and recipient 16 are appropriately configured. As should now be appreciated, with the present invention as set forth herein, sending of a send item 14 to a recipient may be performed in a manner so that the send item 14 is accompanied with a send attestation 18 detailing the human effort expended by the sender.

The programming necessary to effectuate the processes performed in connection with the present invention is relatively straight-forward and should be apparent to the relevant programming public. Accordingly, such programming is not attached hereto. Any particular programming, then, may be employed to effectuate the present invention without departing from the spirit and scope thereof.

In the foregoing description, it can be seen that the present invention comprises a new and useful architecture and method for implementing a Human Interactive Proof (HIP) that requires essentially no active effort be expended by a human, but that the human only expend natural efforts that are detected. Such detected natural effort is verified to the recipient 16 by a trusted attestation unit 24 in a trusted manner so that the recipient 16 can be assured that the detected natural efforts did in fact occur and were not simply contrived by a nefarious entity attempting to trick the recipient 16.

It should be appreciated that changes could be made to the embodiments described above without departing from the inventive concepts thereof. Most significantly, it is to be appreciated that the present invention may be employed not merely to include indicia of human interaction with a send item 14, but to include any indicia relating to a send item 14, be it of human interaction, machine interaction, or otherwise. Thus, it may for example be the case that the present invention is employed to demonstrate to a recipient 16 that a sending application 26 did not send more than a maximum number of send items 14 per unit time, regardless of any human interaction involved. In general it should be understood, therefore, that this invention is not limited to the particular embodiments disclosed, but it is intended to cover modifications within the scope of the present invention as defined by the appended claims.

## Claims

1. A method of describing user interaction in combination with sending a send item from an application of a computing device to a recipient, the computing device having an attestation unit thereon for attesting to trustworthiness and the computing device including hardware and resources, the method comprising:
the application on the computing device facilitating a user in constructing (301) the send item;
one of the application and the attestation unit monitoring (303) for pre-determined indicia that can be employed to detect that the user is a human and is in fact performing activities that a human normally undertakes to construct the send item and appending monitored indicia information to the send item;
the attestation unit authenticating (305) the application to impart trust thereto;
one of the application and the attestation unit, upon the user commanding the application to send the constructed send item to the recipient, constructing (313) a send attestation to accompany the send item, the send attestation being based on the monitored indicia indicating that the human was in fact expending effort to construct the send item and the authentication of the application of the computing device including hardware and resources, wherein the authentication comprises authenticating hardware and/or resources that are used in constructing the send item and wherein the send attestation includes details relating to hardware and/or resources employed in constructing the send item;
one of the attestation unit and the application packaging (315) the constructed send attestation with the constructed send item; and
one of the attestation unit and the application sending (317) the packaged send item and send attestation to the recipient.

2. The method of claim 1 comprising an electronic mail application on the computing device constructing an electronic mail message to be sent to the recipient.

3. The method of claim 1 comprising a requesting application on the computing device constructing a request to be sent to the recipient.

4. The method of claim 1 comprising one of the application and the attestation unit monitoring for pre-determined indicia comprising at least one of keyboard activity, tablet activity, mouse activity, and lack of a run script by which activity of the application is controlled.

5. The method of claim 1 comprising one of the application and the attestation unit monitoring for pre-determined indicia comprising at least one of a minimum construction time for constructing the send item and a maximum number of send items sent per unit time.

6. The method of claim 1 comprising the attestation unit authenticating the application by reviewing a digital certificate proffered thereby.

7. The method of claim 1 , the method further comprising the attestation unit authenticating at least some of the hardware of the computing device that are used in constructing the send item.

8. The method of claim 7 comprising the attestation unit authenticating each piece of the hardware and/or resources by reviewing a digital certificate proffered thereby.

9. The method of claim 1 comprising one of the application and the attestation unit, determining based on the monitored indicia whether predetermined requirements have been met and if so constructing the send attestation.

10. The method of claim 1 comprising constructing the send attestation to include:
a statement describing the application and information relating to the application; and
a statement describing the send item and information relating to the send item including information relating to at least a portion of the monitored indicia.

11. The method of claim 10, the method further comprising the attestation unit authenticating at least some of the hardware and/or resources of the computing device that are used in constructing the send item, the method further comprising constructing the send attestation to include a statement describing the hardware and/or resources and information relating to such hardware and/or resources.

12. The method of claim 1 comprising packaging the constructed send attestation with the constructed send item by appending the send attestation to the send item, signing the packaged send item / send attestation based on a key of the attestation unit to form a digital signature, and appending the digital signature to the packaged send item / send attestation.

13. A method of verifying user interaction in combination with a send item received by a recipient from an application of a computing device including hardware and resources, the send item being in a package with a send attestation based on monitored indicia that can be employed to detect that a user is a human and in fact performs activities that a human normally undertakes to construct the send item and an authentication of the application of the computing device including hardware and/or resources, wherein the authentication comprises authenticating hardware and/or resources that were used in constructing the send item and wherein the send attestation includes details relating to hardware and/or resources employed in constructing the send item, the method comprising:
receiving (401) the package with the send item and the send attestation;
verifying (403) at least one signature included within the package;
examining (405) the send attestation of the package in view of a pre-determined policy to decide (407) whether to honor the send item, whereby each aspect of policy can be measured as against information obtained from the send attestation; and
honoring the send item if the policy is in fact satisfied by the send attestation, and thereby accepting and acting upon the send item.

14. The method of claim 13 comprising receiving the package with the send item comprising a request originating by way of an intermediary that is to be rewarded therefore, and dishonoring the send item if it is determined that the intermediary sent the request without verified user interaction.

15. The method of claim 13 further comprising dishonoring the send item if the policy is not in fact satisfied by the send attestation, and thereby not accepting and acting upon the send item, and returning to the computing device a denial message.

16. The method of claim 13 further comprising dishonoring the send item if the policy is not in fact satisfied by the send attestation, and thereby not accepting and acting upon the send item, and notifying a denial filter of same, whereby the denial filter would then filter out further send items from the computing device.

17. The method of claim 13 further comprising dishonoring the send item if the policy is not in fact satisfied by the send attestation, and thereby not accepting and acting upon the send item, and adding the computing device to a denial list, whereby further send items from the computing device would be treated differently based on being on such list.

18. The method of claim 13 comprising receiving the package with the send item comprising an electronic mail message.

19. The method of claim 13 comprising receiving the package with the send item comprising a request.

20. The method of claim 13 comprising receiving the package with the send attestation comprising indicia monitored during construction of the send item, the indicia including at least one of keyboard activity, tablet activity, mouse activity, and lack of a run script by which activity of the application is controlled.

21. The method of claim 13 comprising receiving the package with the send attestation comprising indicia monitored during construction of the send item, the indicia including at least one of a minimum construction time for constructing the send item and a maximum number of send items sent per unit time.

22. The method of claim 13 comprising receiving the package with the send attestation including:
a statement describing the application and information relating to the application; and
a statement describing the send item and information relating to the send item including information relating to at least a portion of the monitored indicia.

23. The method of claim 22, the method comprising receiving the package with the send attestation further including a statement describing the hardware and/or resources and information relating to such hardware and/or resources.

24. The method of claim 13 comprising receiving the package with the send attestation appended to the send item, and an appended digital signature based on the packaged send item / send attestation.

## Patentansprüche

1. Verfahren zum Beschreiben einer Benutzerinteraktion in Kombination mit dem Senden eines Sendegegenstandes von einer Applikation einer Computervorrichtung zu einem Empfänger, wobei sich in der Computervorrichtung eine Bestätigungseinheit zum Bestätigen einer Vertrauenswürdigkeit befindet und die Computervorrichtung Hardware und Ressourcen beinhaltet, wobei das Verfahren umfasst, dass:
es die Applikation in der Computervorrichtung einem Benutzer ermöglicht, den Sendegegenstand zu erstellen (301);
die Applikation oder die Bestätigungseinheit vorbestimmte Hinweise überwacht (303), die verwendet werden können um zu erfassen, dass der Benutzer ein Mensch ist und tatsächlich Aktivitäten ausführt, die ein Mensch normalerweise unternimmt, um den Sendegegenstand zu erstellen, und überwachte Hinweisinformationen an den Sendegegenstand anfügt;
die Bestätigungseinheit die Applikation authentifiziert (305), dieser Vertrauen entgegenzubringen;
die Applikation oder die Bestätigungseinheit, wenn der Benutzer die Applikation anweist, den erstellten Sendegegenstand zu dem Empfänger zu senden, eine Sendebestätigung erstellt (313), die den Sendegegenstand begleitet, wobei die Sendebestätigung auf den überwachten Hinweisen, die kennzeichnen, dass der Mensch in der Tat Anstrengungen darauf verwendet hat, den Sendegegenstand zu erstellen, und der Authentifizierung der Applikation der Computervorrichtung basiert, die Hardware und Ressourcen umfasst, wobei die Authentifizierung das Authentifizieren von Hardware und/oder Ressourcen umfasst, die bei der Erstellung des Sendegegenstandes verwendet werden, und die Sendebestätigung Details beinhaltet, die sich auf Hardware und/oder Ressourcen beziehen, die bei der Erstellung des Sendegegenstandes verwendet werden;
die Bestätigungseinheit oder die Applikation die erstellte Sendebestätigung mit dem erstellten Sendegegenstand packt (315); und
die Bestätigungseinheit oder die Applikation den gepackten Sendegegenstand und die Sendebestätigung zu dem Empfänger sendet (317).

2. Verfahren nach Anspruch 1, umfassend, dass eine E-Mail-Applikation in der Computervorrichtung eine E-Mail-Nachricht erstellt, die zu dem Empfänger zu senden ist.

3. Verfahren nach Anspruch 1, umfassend, dass eine Anfrageapplikation in der Computervorrichtung eine Anfrage erstellt, die zu dem Empfänger zu senden ist.

4. Verfahren nach Anspruch 1, umfassend, dass die Applikation oder die Bestätigungseinheit vorbestimmte Hinweise überwacht, die eine Tastaturaktivität und/oder eine Tablettaktivität und/oder eine Mausaktivität und/oder das Fehlen eines Ablaufsskriptes beinhalten, mit dem die Aktivität der Applikation gesteuert wird.

5. Verfahren nach Anspruch 1, umfassend, dass die Applikation oder die Bestätigungseinheit vorbestimmte Hinweise überwacht, die eine minimale Erstellungszeit zum Erstellen des Sendegegenstandes und/oder eine maximale Anzahl von Sendegegenständen umfassen, die pro Zeiteinheit gesendet werden.

6. Verfahren nach Anspruch 1, umfassend, dass die Bestätigungseinheit die Applikation authentifiziert, indem sie ein digitales Zertifikat prüft, das von dieser angeboten wird.

7. Verfahren nach Anspruch 1, wobei das Verfahren weiterhin umfasst, dass die Bestätigungseinheit wenigstens einen Teil der bei der Erstellung des Sendegegenstandes verwendeten Hardware der Computervorrichtung authentifiziert.

8. Verfahren nach Anspruch 7, umfassend, dass die Bestätigungseinheit jedes Stück der Hardware und/oder Ressourcen durch Prüfen eines von diesen angebotenen Zertifikates authentifiziert.

9. Verfahren nach Anspruch 1, umfassend, dass die Applikation oder die Bestätigungseinheit auf der Basis der überwachten Hinweise bestimmt, ob vorbestimmte Erfordernisse erfüllt wurden, und sofern dies der Fall ist, die Sendebestätigung erstellt.

10. Verfahren nach Anspruch 1, umfassend das Erstellen der Sendebestätigung, so dass diese enthält:
eine Anweisung, die die Applikation beschreibt, und Informationen, die sich auf die Applikation beziehen; und
eine Anweisung, die den Sendegegenstand beschreibt, und Informationen, die sich auf den Sendegegenstand beziehen, umfassend Informationen, die sich auf wenigstens einen Teil der überwachten Hinweise beziehen.

11. Verfahren nach Anspruch 10, wobei das Verfahren weiterhin umfasst, dass die Bestätigungseinheit wenigstens einen Teil der Hardware und/oder Ressourcen der Computervorrichtung authentifiziert, die bei der Erstellung des Sendegegenstandes verwendet werden, wobei das Verfahren weiterhin das Erstellen der Sendebestätigung umfasst, so dass diese eine Anweisung die Hardware und/oder Ressourcen beschreibt, und Informationen enthält, die sich auf derartige Hardware und/oder Ressourcen beziehen.

12. Verfahren nach Anspruch 1, umfassend das Packen der erstellten Sendebestätigung mit dem erstellten Sendegegenstand durch Anfügen der Sendebestätigung an den Sendegegenstand, Signieren des Paketes aus Sendegegenstand und Sendebestätigung auf der Basis eines Schlüssels der Bestätigungseinheit, um eine digitale Signatur zu erzeugen, und Anfügen der digitalen Signatur an das Paket aus Sendegegenstand und Sendebestätigung.

13. Verfahren zum Verifizieren einer Benutzerinteraktion in Kombination mit einem Sendegegenstand, der durch einen Empfänger von einer Applikation einer Computervorrichtung empfangen wird, die Hardware und Ressourcen enthält, wobei sich der Sendegegenstand in einem Paket mit einer Sendebestätigung befindet, die auf überwachten Hinweisen, die verwendet werden können um zu erfassen, dass ein Benutzer ein Mensch ist und tatsächlich Aktivitäten ausführt, die ein Mensch normalerweise unternimmt, um den Sendegegenstand zu erstellen, und einer Authentifizierung der Applikation der Computervorrichtung basiert, die Hardware und/oder Ressourcen enthält, wobei die Authentifizierung das Authentifizieren von Hardware und/oder Ressourcen umfasst, die bei der Erstellung des Sendegegenstandes verwendet wurden, und die Sendebestätigung Details umfasst, die sich auf Hardware und/oder Ressourcen beziehen, die bei der Erstellung des Sendegegenstandes verwendet werden, wobei das Verfahren umfasst:
Empfangen (401) des Paketes mit dem Sendegegenstand und der Sendebestätigung;
Verifizieren (403) wenigstens einer Signatur, die in dem Paket enthalten ist;
Prüfen (405) der Sendebestätigung des Paketes hinsichtlich einer vorbestimmten Richtlinie um zu entscheiden (407), ob der Sendegegenstand anzuerkennen ist, wobei jeder Aspekt der Richtlinie an Informationen gemessen werden kann, die man aus der Sendebestätigung erhält; und
Anerkennen des Sendegegenstandes, sofern die Richtlinie tatsächlich durch die Sendebestätigung erfüllt wird, und dadurch Akzeptieren und Reagieren auf den Sendegegenstand.

14. Verfahren nach Anspruch 13, umfassend das Empfangen des Paketes mit dem Sendegegenstand, der eine Anfrage enthält, die von einem Vermittler stammt, der dafür zu entlohnen ist, und Ablehnen des Sendegegenstandes, sofern bestimmt wird, dass der Vermittler die Anfrage ohne verifiziertes Benutzereingreifen gesendet hat.

15. Verfahren nach Anspruch 13, weiterhin umfassend das Ablehnen des Sendegegenstandes, sofern die Richtlinie tatsächlich nicht von der Sendebestätigung erfüllt wird, und dadurch nicht Akzeptieren und Reagieren auf den Sendegegenstand sowie Zurücksenden einer Verweigerungsnachricht zu der Computervorrichtung.

16. Verfahren nach Anspruch 13, weiterhin umfassend das Ablehnen des Sendegegenstandes, sofern die Richtlinie von der Sendebestätigung tatsächlich nicht erfüllt wird, und dadurch nicht Akzeptieren und Reagieren auf den Sendegegenstand, sowie bekanntgeben eines Verweigerungsfilters desselben, wobei das Verweigerungsfilter anschließend weitere Sendegegenstände aus der Computervorrichtung ausfiltern würde.

17. Verfahren nach Anspruch 13, weiterhin umfassend das Ablehnen des Sendegegenstandes, sofern die Richtlinie von der Sendebestätigung tatsächlich nicht erfüllt wird, und dadurch nicht Akzeptieren und Reagieren auf den Sendegegenstand, sowie Hinzufügen der Computervorrichtung zu einer Verweigerungsliste, wobei weitere Sendegegenstände von der Computervorrichtung aufgrund der Tatsache, dass sie sich auf einer derartigen Liste befindet, anders behandelt würden.

18. Verfahren nach Anspruch 13, umfassend das Empfangen des Paketes mit dem Sendegegenstand, der eine E-Mail-Nachricht enthält.

19. Verfahren nach Anspruch 13, umfassend das Empfangen des Paketes mit dem Sendegegenstand, der eine Anfrage enthält.

20. Verfahren nach Anspruch 13, umfassend das Empfangen des Paketes mit der Sendebestätigung, die Hinweise enthält, die während der Erstellung des Sendegegenstandes überwacht werden, wobei die Hinweise eine Tastaturaktivität und/oder eine Tablettaktivität und/oder eine Mausaktivität und/oder das Fehlen eines Ablaufskriptes umfassen, durch das die Aktivität der Applikation gesteuert wird.

21. Verfahren nach Anspruch 13, umfassend das Empfangen des Paketes mit der Sendebestätigung, die Hinweise enthält, die während des Erstellens des Sendegegenstandes überwacht werden, wobei die Hinweise eine minimale Erstellungszeit zum Erstellen des Sendegegenstandes und/oder eine maximale Anzahl von Sendegegenständen umfassen, die pro Zeiteinheit gesendet werden.

22. Verfahren nach Anspruch 13, umfassend das Empfangen des Paketes mit der Sendebestätigung umfassend:
eine Anweisung, die die Applikation beschreibt, und Informationen, die sich auf die Applikation beziehen; und
eine Anweisung, die den Sendegegenstand beschreibt, und Informationen, die sich auf den Sendegegenstand beziehen, umfassend Informationen, die sich auf wenigstens einen Teil der überwachten Hinweise beziehen.

23. Verfahren nach Anspruch 22, wobei das Verfahren das Empfangen des Paketes mit der Sendebestätigung umfasst, die weiterhin eine Anweisung, die die Hardware und/oder Ressourcen beschreibt, und Informationen enthält, die sich auf derartige Hardware und/oder Ressourcen beziehen.

24. Verfahren nach Anspruch 13, umfassend das Empfangen des Paketes mit der Sendebestätigung, die an den Sendegegenstand angefügt ist, und einer angefügten digitalen Signatur auf der Basis des Paketes aus Sendegegenstand und Sendebestätigung.

## Revendications

1. Procédé de description d'une interaction d'utilisateur conjointement à l'envoi à un destinataire d'un élément d'envoi à partir d'une application d'un dispositif informatique, le dispositif informatique comprenant une unité d'attestation pour attester une crédibilité, et le dispositif informatique comprenant des composants matériels et des ressources, le procédé comprenant :
l'assistance d'un utilisateur par l'application présente sur le dispositif informatique pour la construction (301) de l'élément d'envoi ;
la surveillance (303), soit par l'application, soit par l'unité d'attestation, d'indices prédéterminés qui peuvent être employés pour détecter si l'utilisateur est un être humain et qu'il est effectivement en train de réaliser des activités qu'un être humain réalise normalement pour construire l'élément d'envoi, et la mise en annexe d'information sur les indices surveillés à l'élément d'envoi ;
l'authentification (305) de l'application, par l'unité d'attestation, pour lui assigner une crédibilité ;
la construction (313), soit par l'application, soit par l'unité d'attestation, d'une attestation d'envoi pour accompagner l'élément d'envoi lorsque l'utilisateur commande à l'application d'envoyer l'élément d'envoi construit au destinataire, l'attestation d'envoi étant basée sur les indices surveillés indiquant que l'être humain consacrait effectivement des efforts pour construire l'élément d'envoi, et l'authentification de l'application du dispositif informatique comprenant des composants matériels et des ressources, dans lequel l'authentification comprend l'authentification de composants matériels et/ou de ressources qui sont utilisés pour la construction de l'élément d'envoi, et dans lequel l'attestation d'envoi comprend des détails relatifs aux composants matériels et/ou aux ressources employés pour la construction de l'élément d'envoi ;
la préparation (315), soit par l'unité d'attestation, soit par l'application, de paquets de l'attestation d'envoi construite avec l'élément d'envoi construit ; et
l'envoi (317) au destinataire, soit par l'unité d'attestation, soit par l'application, de l'élément d'envoi et de l'attestation d'envoi mis en paquets.

2. Procédé selon la revendication 1 comprenant la construction, par une application de courrier électronique présente sur le dispositif informatique, d'un message de courrier électronique à envoyer au destinataire.

3. Procédé selon la revendication 1 comprenant la construction, par une application demandeuse présente sur le dispositif informatique, d'une demande à envoyer au destinataire.

4. Procédé selon la revendication 1 comprenant la surveillance, soit par l'application, soit par l'unité d'attestation, d'indices prédéterminés comprenant au moins une activité parmi une activité de clavier, une activité de tablette, une activité de souris et l'absence d'un script de lancement permettant de contrôler l'activité de l'application.

5. Procédé selon la revendication 1 comprenant la surveillance, soit par l'application, soit par l'unité d'attestation, d'indices prédéterminés comprenant au moins un indice parmi un temps de construction minimum pour construire l'élément d'envoi et un nombre maximum d'éléments d'envoi envoyés par unité de temps.

6. Procédé selon la revendication 1, comprenant l'authentification de l'application par l'unité d'attestation en révisant un certificat numérique présenté.

7. Procédé selon la revendication 1, le procédé comprenant en outre l'authentification par l'unité d'attestation d'au moins certains des composants matériels du dispositif informatique qui sont utilisés pour la construction de l'élément d'envoi.

8. Procédé selon la revendication 7 comprenant l'authentification, par l'unité d'attestation, de chaque composant matériel et/ou de ressource en révisant un certificat numérique présenté.

9. Procédé selon la revendication 1 comprenant la détermination, soit par l'application, soit par l'unité d'attestation, sur base des indices surveillés, du fait que des exigences prédéterminées ont été respectées et, si c'est le cas, la construction de l'attestation d'envoi.

10. Procédé selon la revendication 1 comprenant la construction de l'attestation d'envoi, y compris :
une déclaration décrivant l'application et de l'information relative à l'application ; et
une déclaration décrivant l'élément d'envoi et de l'information relative à l'élément d'envoi, y compris de l'information relative à au moins une partie des indices surveillés.

11. Procédé selon la revendication 10, le procédé comprenant en outre l'authentification par l'unité d'attestation d'au moins certains des composants matériels et/ou ressources du dispositif informatique qui sont utilisés pour la construction de l'élément d'envoi, le procédé comprenant en outre la construction de l'attestation d'envoi pour qu'elle comprenne une déclaration décrivant les composants matériels et/ou les ressources et de l'information relative à des tels composants matériels et/ou ressources.

12. Procédé selon la revendication 1, comprenant la préparation de paquets de l'attestation d'envoi construite avec l'élément d'envoi construit en annexant l'attestation d'envoi à l'élément d'envoi, la signature de l'élément d'envoi / de l'attestation d'envoi préparés en paquets sur base d'une clé de l'unité d'attestation pour former une signature numérique, et la mise en annexe de la signature numérique à l'élément d'envoi / à l'attestation d'envoi mis en paquets.

13. Procédé de vérification d'une interaction d'utilisateur conjointement à un élément d'envoi reçu par un destinataire, provenant d'une application d'un dispositif informatique comprenant des composants matériels et des ressources, l'élément d'envoi étant dans un paquet avec une attestation d'envoi basée sur des indices surveillés, qui peuvent être employés pour détecter si l'utilisateur est un être humain et qu'il réalise effectivement des activités qu'un être humain réalise normalement pour construire l'élément d'envoi, et une authentification de l'application du dispositif informatique comprenant des composants matériels et/ou des ressources, dans lequel l'authentification comprend l'authentification de composants matériels et/ou de ressources qui ont été utilisés pour la construction de l'élément d'envoi et dans lequel l'attestation d'envoi comprend des détails relatifs aux composants matériels et/ou aux ressources employés pour la construction de l'élément d'envoi, le procédé comprenant :
la réception (401) du paquet avec l'élément d'envoi et l'attestation d'envoi ;
la vérification (403) d'au moins une signature comprise dans le paquet ;
l'examen (405) de l'attestation d'envoi du paquet pour une politique prédéterminée afin de décider (407) si l'élément d'envoi doit être accepté ou non, dans lequel chaque aspect de la politique peut être mesuré par rapport à de l'information obtenue de l'attestation d'envoi ; et
l'acceptation de l'élément d'envoi si la politique est effectivement respectée par l'attestation d'envoi, moyennant quoi l'élément d'envoi est accepté et traité.

14. Procédé selon la revendication 13 comprenant la réception du paquet, l'élément d'envoi comportant une demande émise à travers un intermédiaire qui doit être récompensé en conséquence, et la non-acceptation de l'élément d'envoi s'il est déterminé que l'intermédiaire a envoyé la demande sans une interaction d'utilisateur vérifiée.

15. Procédé selon la revendication 13 comprenant en outre la non-acceptation de l'élément d'envoi si la politique n'est pas effectivement respectée par l'attestation d'envoi, moyennant quoi l'élément d'envoi n'est pas accepté ni traité, et le renvoi d'un message de refus au dispositif informatique.

16. Procédé selon la revendication 13 comprenant en outre la non-acceptation de l'élément d'envoi si la politique n'est pas effectivement respectée par l'attestation d'envoi, moyennant quoi l'élément d'envoi n'est pas accepté ni traité, et la notification de ce fait à un filtre de refus, moyennant quoi le filtre de refus filtre ensuite des éléments ultérieurs envoyés par le dispositif informatique.

17. Procédé selon la revendication 13 comprenant en outre la non-acceptation de l'élément d'envoi si la politique n'est pas effectivement respectée par l'attestation d'envoi, moyennant quoi l'élément d'envoi n'est pas accepté ni traité, et l'ajout du dispositif informatique à une liste de refus, moyennant quoi des éléments ultérieurs envoyés par le dispositif informatique sont traités différemment s'ils appartiennent à une telle liste.

18. Procédé selon la revendication 13 comprenant la réception du paquet, l'élément d'envoi comportant un message par courrier électronique.

19. Procédé selon la revendication 13 comprenant la réception du paquet, l'élément d'envoi comportant une demande.

20. Procédé selon la revendication 13 comprenant la réception du paquet, l'attestation d'envoi comportant des indices surveillés durant la construction de l'élément d'envoi, les indices comprenant au moins une activité parmi une activité de clavier, une activité de tablette, une activité de souris et l'absence d'un script de lancement permettant de contrôler l'activité de l'application.

21. Procédé selon la revendication 13 comprenant la réception du paquet, l'attestation d'envoi comportant des indices surveillés durant la construction de l'élément d'envoi, les indices comprenant au moins un indice parmi un temps de construction minimum pour construire l'élément d'envoi et un nombre maximum d'éléments d'envoi envoyés par unité de temps.

22. Procédé selon la revendication 13 comprenant la réception du paquet, l'attestation d'envoi comportant :
une déclaration décrivant l'application et de l'information relative à l'application ; et
une déclaration décrivant l'élément d'envoi et de l'information relative à l'élément d'envoi, y compris de l'information relative à au moins une partie des indices surveillés.

23. Procédé selon la revendication 22, le procédé comprenant la réception du paquet, l'attestation d'envoi comportant en outre une déclaration décrivant les composants matériels et/ou les ressources et de l'information relative à de tels composants matériels et/ou ressources.

24. Procédé selon la revendication 13, comprenant la réception du paquet avec l'attestation d'envoi annexée à l'élément d'envoi, et une signature numérique mise en annexe sur base de l'élément d'envoi / de l'attestation d'envoi mis en paquets.
